Europäisches Patentamt

European Patent Office

Office européen des brevets

(19)

(11) Veröffentlichungsnummer: **0 217 321**
**A2**

(12) # EUROPÄISCHE PATENTANMELDUNG

(21) Anmeldenummer: 86113323.9

(22) Anmeldetag: 27.09.86

(51) Int. Cl.⁴: **F16K 27/02**

(30) Priorität: 02.10.85 DE 8528066 U
25.11.85 DE 8533090 U
01.04.86 DE 8608736 U
23.05.86 DE 8614038 U

(43) Veröffentlichungstag der Anmeldung:
08.04.87 Patentblatt 87/15

(84) Benannte Vertragsstaaten:
AT BE CH DE FR IT LI LU NL

(71) Anmelder: **Viessmann, Hans, Dr.**
**Im Hain**
**D-3559 Battenberg/Eder(DE)**

(72) Erfinder: **Viessmann, Hans, Dr.**
**Im Hain**
**D-3559 Battenberg/Eder(DE)**

(74) Vertreter: **Wolf, Günter, Dipl.Ing.**
**Patentanwälte Dipl.-Ing. Amthor Dipl.-Ing.**
**Wolf Postfach 70 02 45 An der Mainbrücke 16**
**D-6450 Hanau 7(DE)**

(54) **Absperrventil.**

(57) Das Absperrventil ist für insbesondere Heizkesselanschlußarmaturen bestimmt und besteht aus einem Gehäuse (1) mit Ventilsitz, zu dem im Gehäuse ein verstellbarer Ventilverschlußkörper (5) angeordnet ist. Das Gehäuse (1) ist als gerader Rohrabschnitt (1') ausgebildet, dessen einer Öffnungsbereich mit Innengewinde (2) zur abgedichteten Aufnahme des einschraubbaren Anschlußstopfens (3) des axial in Richtung der Rohrabschnittlängsachse (4) verstellbaren Ventilverschlußkörpers (5) versehen ist. Zwischen dem angesetzten, eingesetzten oder eingeprägten als Ventilsitzring (6) ausgebildeten Ventilsitz und dem Anschlußstopfen (3) des Ventilverschlußkörpers (5) des Rohrabschnittes (1') ist eine Wandöffnung (7) angeordnet. An dieser Wandöffnung (7) ist ein rohrförmiger Anschlußstutzen (8) angeschweißt, und unterhalb des Ventilsitzringes (6) ist mindestens ein weiterer Anschluß (9) für ein weiteres Anschlußelement (10) angeordnet.

Fig. 1

## Absperrventil

Die Erfindung betrifft ein Absperrventil für insbesondere Heizkesselanschlußarmaturen, das aus einem Gehäuse mit Ventilsitz besteht, zu dem im Gehäuse ein verstellbarer Ventilverschlußkörper angeordnet ist.

Derartige absperrbare Durchgangsventile mit relativ kleinem Querschnitt sind allgemein bekannt und in Benutzung, wozu auf "Lueger", Lexikon der Technik, Band I, 4. Auflage, Seite 3, verwiesen wird, bei welchen Durchgangsabsperrventilen es sich allerdings um solche handelt, deren Gehäuse als Gußkörper ausgebildet sind und die insoweit spanabhebender Bearbeitungen im Ventilsitzbereich und an den Anschluß-bzw. Verschlußquerschnitten bedürfen, was solche Ventile, abgesehen vom Material (in der Regel Bronce oder Messing) unverhältnismäßig teuer macht.

Bekannt ist es auch, doch dies gilt insbesondere nur für Ventile mit großen Querschnitten, solche Ventile in Schweißkonstruktion zu erstellen, da sich ein solcher Aufwand für kleinere Ventile - (bis bspw. zu 5 cm Ø) nicht rechtfertigt. Solche Schweißkonstruktionen, die zudem aufgrund ihrer Größe in der Regel mit Anschlußflanschen versehen sein müssen, sind in der Regel T-förmig ausgebildet, wobei der Ventilverschlußkörper quer zur Durchströmrichtung in das Gehäuse eingreift, was wiederum besondere und aufwendige Ventilsitzgestaltungen verlangt, wie sie bspw. durch die FR-PS 846 760 oder die DE-PS 967 453 (St 5510 XII/47g) belegt sind.

Der Erfindung liegt demgemäß die Aufgabe zugrunde, ein Absperrventil der eingangs genannten Art, insbesondere für den genannten Zweck, dahingehend zu verbessern und so zu gestalten, daß ein solches Ventil mit möglichst geringem Fertigungs-und Materialaufwand aus einfachem Rohrmaterial gefertigt und zu einem Ventil zusammengefügt werden kann und zwar mit der Maßgabe, daß das Ventilgehäuse als Grundkörper für die verschiedensten Anschluß-und Installationsmöglichkeiten, insbesondere innerhalb eines sogenannten Heizkreisverteilersystems verwendbar sein soll.

Diese Aufgabe ist mit einem Absperrventil der eingangs genannten Art nach der Erfindung durch die im Kennzeichen des Hauptanspruches angeführten Merkmale gelöst.

Durch diese erfindungsgemäße Ausbildung benötigt man für die Herstellung eines solchen Ventiles praktisch nur ein einfaches, gerade abgeschnittenes Rohrstück, in dem axial verstellbar der Ventilverschlußkörper angeordnet ist, wodurch auch der eigentliche Ventilsitz in einfacher Ringform vorgesehen werden kann, was noch näher erläutert wird. Dieser "Gehäusegrundkörper", zu dem noch ein seitlich zwischen dem Anschlußstopfen für den Ventilverschlußkörper und dem Ventilsitz an einer einfach einzuschneidenden Wandöffnung angesetzter Anschlußstutzen gehört, kann in dieser Form als Ausgangselement für die verschiedensten Ventilgestaltungen dienen, wie sie sich bspw. und bevorzugt nach den Unteransprüchen ergeben.

Das erfindungsgemäße Absperrventil wird nachfolgend anhand der zeichnerischen Darstellung von Ausführungsbeispielen näher erläutert.

Es zeigt schematisch

Fig. 1 in Seitenansicht und teilweise im Schnitt eine Ausführungsform des Absperrventils;

Fig. 2 -4 im Schnitt und stark schematisiert drei weitere Ausführungsformen des Absperrventils;

Fig. 5 teilweise in Schnitt und Ansicht eine andere Ausführungsform;

Fig. 6 eine besondere Ausführungsform eines Ventilabganges mit zugehörigem Anschlußelement;

Fig. 7 ein Installationsbeispiel für ein Ventil nach Fig. 5 bzw. 6 und

Fig. 8-12 im Schnitt weitere Ausführungsformen.

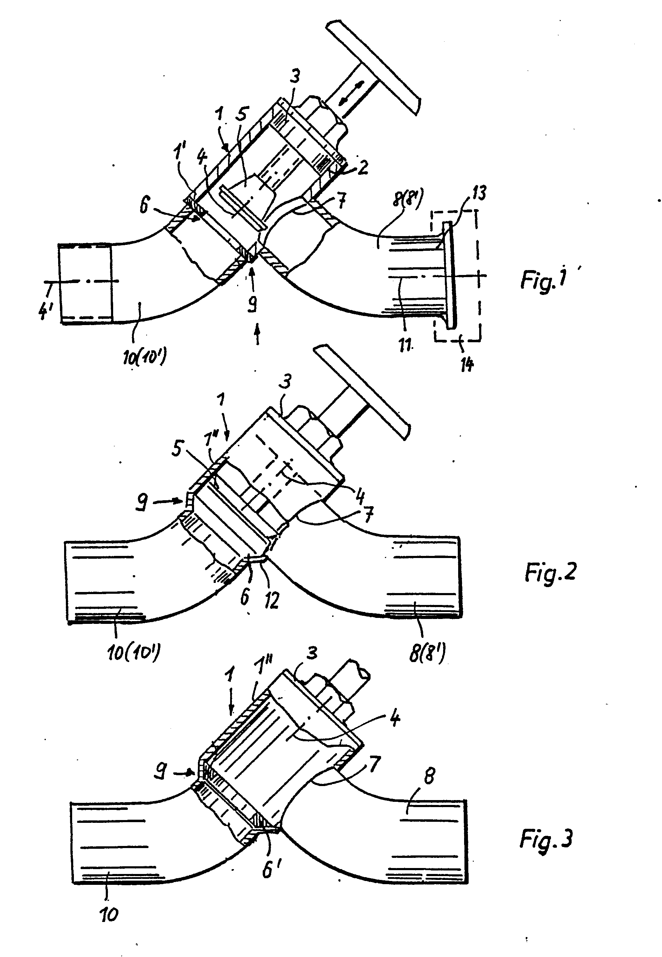

Wie aus Fig. 1 - 4 erkennbar, besteht das Ventil aus einem Gehäuse 1 in Form eines geraden Rohrabschnittes 1' in dem geneigt zur Strömungsdurchgangsachse 4' aber koaxial zum Rohrabschnitt 1' der senkrecht zum Ventilsitz verstellbare Ventilverschlußkörper 5 angeordnet ist. Die einfach am Gehäuse 1 angesetzten Anschlußstutzen 8, 10 sind aus zwei Rohrstücken mit abgewinkelten bspw. gebogenen Enden 11 gebildet, wobei das gehäuseseitige Ende des Anschlußstutzens 8 zwischen dem im Rohrabschnitt 1' angeordneten Ventilsitzring 6 und dem Anschlußstopfen 3 in den mit Öffnung 7 versehenen Rohrabschnitt mündend angeordnet ist. Zwischen dem offenen Ende des Rohrabschnittes 1' und dem Anschlußstutzen 10 ist der Ventilsitz 6 angeordnet, der in diesem Falle aus einer ausgestanzten Ringscheibe besteht, die beim Anschweißen des Anschlußstutzens 10 mit erfaßt wird. Am anderen Ende des Rohrabschnittes 1' ist lediglich ein Innengewinde 2 einzuschneiden, so daß dort in bekannter Weise der Anschlußstopfen 3 des Ventilverschlußkörpers 5 entsprechend abgedichtet eingeschraubt werden kann.

Gemäß Fig. 2, 3 ist es aber auch möglich, den Rohrabschnitt in Form einer Rohrerweiterung 1" des Anschlußstutzens 10 auszubilden, wobei gemäß Fig. 2 die Erweiterungsstufe 9 unmittelbar selbst den Sitz für den Umfangsrand des Ventilverschlußkörpers 5 bildet. Dabei stellt es keine Schwierigkeit dar, den Ventilverschlußkörper 5 im Bereich seines Umfangsrandes der Form der Erweiterungsstufe 9 anzupassen. Abgesehen davon, ist es aber auch möglich, wie in Fig. 3 dargestellt, auf die Erweiterungsstufe 9 einen Ventilsitz ring 6' aufzulegen und mit der Innenwand der Erweiterungsstufe 9 zu verschweißen.

Da es sich bei den die Anschlußstutzen 8, 10 bildenden Rohrstücken um einfache, glatt auslaufende Rohre handelt, ist es möglich, den einen und/oder auch den anderen Anschlußstutzen an seinem freien Ende 13 mit einem Überwurfmutterhaltekragen 14 zu versehen. Je nach vorgesehener Rohrwandstärke kann natürlich auf die Enden auch ohne weiteres Außengewinde aufgeschnitten sein, wofür letztlich die gewünschte und geeignete Anschlußart maßgebend ist.

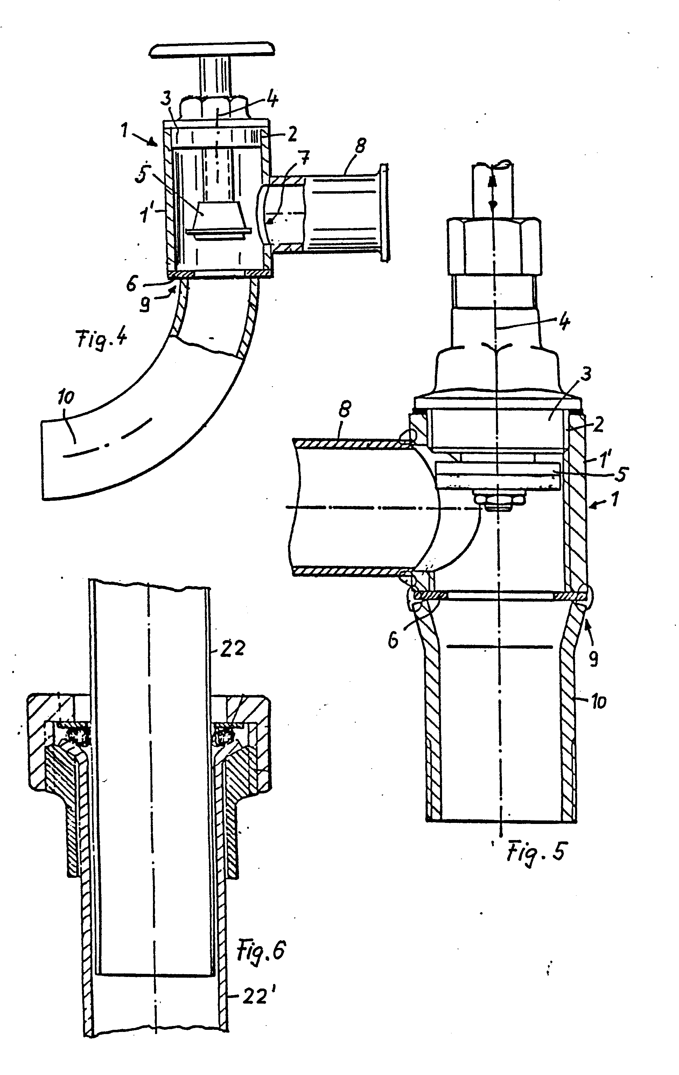

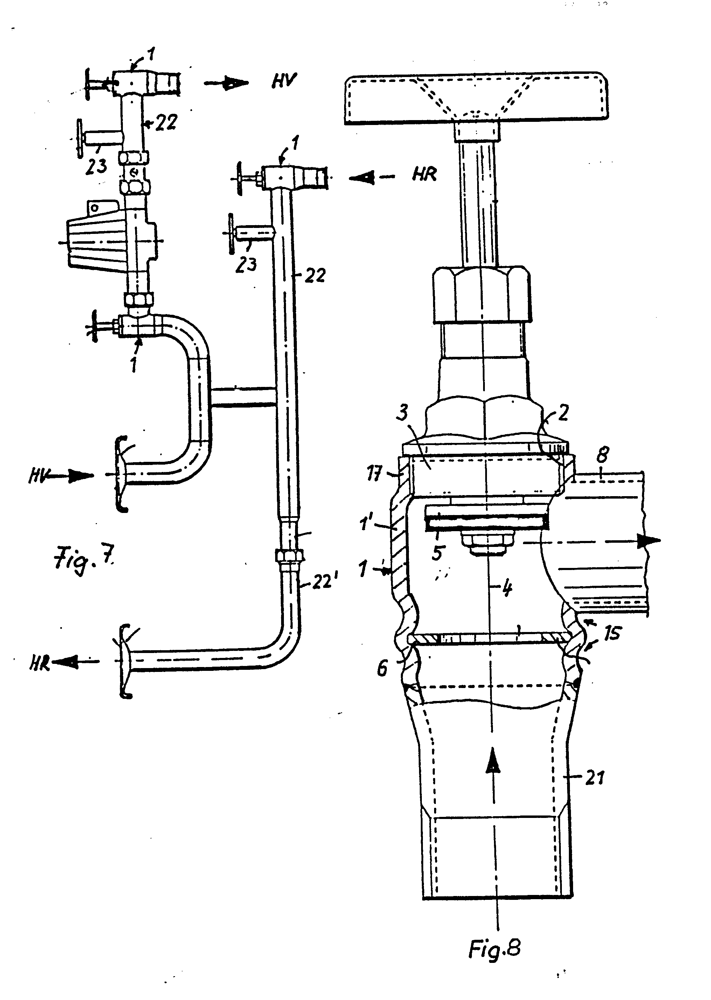

Bei der Ausführungsform nach Fig. 5 ist ebenfalls wie der vom vorbeschriebenen Rohrabschnitt 1' mit Ventilsitzring 6 axial verstellbare Ventilverschlußkörper 5 und seitlichen Anschlußstutzen 8 ausgegangen, wobei diese Ausführungsform in Fig. 7 in ihrer Zuordnung zu einem Heizkreisverteiler dargestellt ist. Da die Absperrventile und auch der Heizkreisverteiler an sich bekannt sind, bedürfen diese keiner ins Einzelne gehenden Beschreibung. Wesentlich bei dieser Ausführungsform ist, daß der eine Abgang 8 in Form eines frei endenden Rohrstückes 22 (siehe Fig. 6) ausgebildet ist, das eine beliebige Länge haben kann, d.h. eine Länge, wie sie für die Einbindung des Absperrventiles in einen bestimmten Verteiler unter Berücksichtigung der Distanzen der Vor-und Rücklaufanschlußstutzen zum Heizungskessel (nicht dargestellt) und der Heizkreisanschlüsse erforderlich sind. Der jeweils andere Anschlußstutzen 10 kann in verschiedener Weise ausgebildet sein, d.h., entweder als Schraubanschluß oder als Flanschanschluß (nicht dargestellt) oder in Form eines Bördelrandes 14 mit Überwurfmutter 14' gemäß Fig. 1.

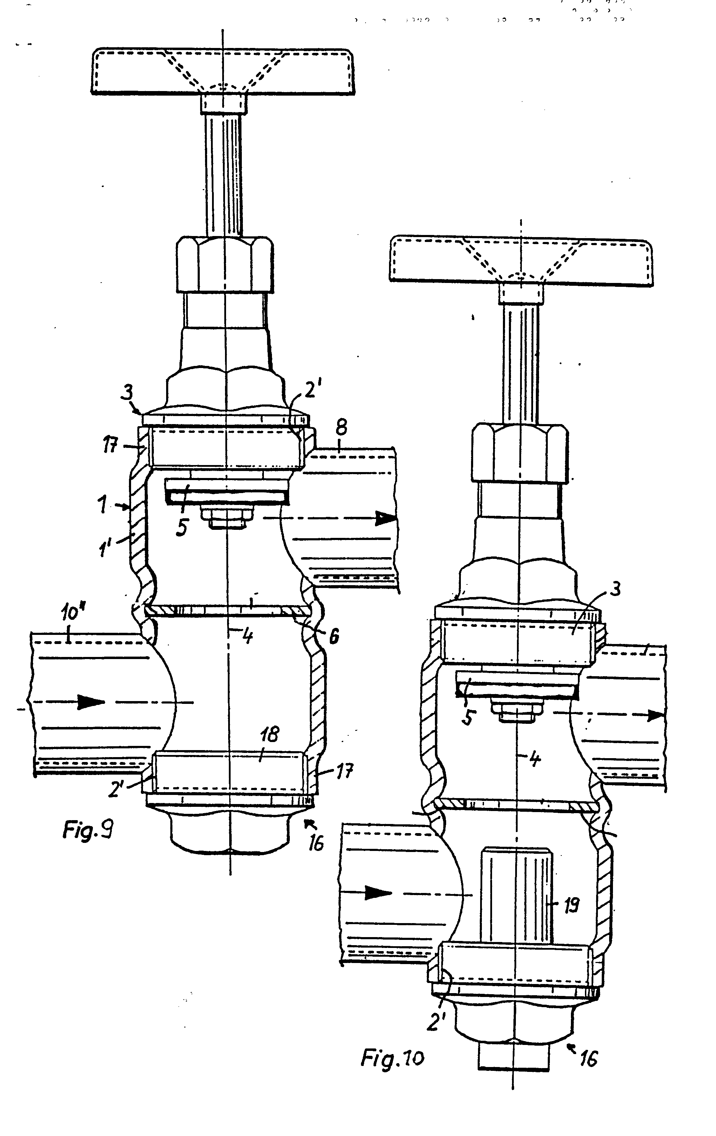

Besonders vorteilhaft ist die Ausführungsform, bei der das Rohrstück 22 im Sinne der Fig. 6 in der dargestellten Weise mit einem etwas weiteren Anschlußrohrstück 22' verbunden ist, da damit, wie aus Fig. 1 erkennbar, problemlos unter schiedliche Distanzen der Anschlüsse zum Heizkessel und/oder denen der Heizungskreise eingestellt werden können, ohne distanzausgleichende Rohrzwischenstücke benutzen zu müssen. Das Prinzip der Anordnung eines frei endenden Rohrstückes 22 am Absperrventil ist natürlich davon unabhängig, ob dieses Rohrstück gleichgerichtet zum anderen Abgang 10 (Fig. 9-12), rechtwinklig (Fig. 5) oder bogenförmig (Fig. 4) vom Absperrventil 7 abgeht. Vorteilhaft kann am Rohrstück 22 der Sitz für ein Thermometer 23 unmittelbar unter dem eigentlichen Ventil mit vorgesehen sein, so daß dafür ein sonst zusätzlich ggf. erforderliches Rohrzwischenstück ebenfalls entfallen kann. Wie ohne weiteres vorstellbar, kann ggf. die Ausstattung des freien Endes des Rohrstückes 22 mit einem Außen- und/oder Innengewinde von vornherein vorgesehen werden, was weder einer Direktverschweißung noch einer Anschlußverbindung im Sinne der Fig. 6 entgegensteht, wobei im Falle eines Außengewindes nur dafür gesorgt sein muß, daß sich dieses außerhalb der eigentlichen Verbindungs-bzw. Abdichtstelle am Rohrstück 22 befinden muß.

Das Grundprinzip ist auch bei den Ausführungsformen nach Fig. 8-12 eingehalten, da auch hier wieder ein gerader Rohrabschnitt 1' mit Anschlußstutzen 8 vorhanden ist, wobei im Rohrstück ein eine Durchgangsöffnung aufweisender Ventilsitzring 6 für den senkrecht dazu verstellbaren Ventilverschlußkörper 5 angeordnet ist. Der Ventilsitz 6 ist dabei mit seinem äußeren Umfangsrand zwischen einer beidseitig zum Ring 6 und unterhalb des seitlichen Anschlußstutzens 8 angeordneten Wandprägung 15 des Rohrabschnittes fixiert, wobei das Ende des Rohrabschnittes die Wandprägung 15 überragt, die bei der Herstellung mit geeigneten Rollwerkzeugen um den vorher eingebrachten Ventilsitzring 6 eingerollt wird. Ein Einschweißen des Ventilsitzringes 1 ist natürlich ebenfalls möglich, wobei die Prägungen 15 nicht erforderlich sind. Eine wesentlich kleinere und nur einseitige Prägung 15' kann vorgesehen werden, um den ein gebrachten Ventilsitzring 6 beim Anschweißen einen besseren und lagegenaueren Halt zu vermitteln (Fig. 12).

Am überragenden Ende des Rohrabschnittes 1' ist im Beispiel der Fig. 8 ein im Durchmesser reduziertes Anschlußstück 21 bspw. durch Anschweißen angeschlossen, dessen freies Ende je nach den Anschlußerfordernissen mit Innen-oder Außengewinde versehen ist, ggf. aber auch glatt zwecks Schweißanschluß auslaufen oder ggf. auch mit einem Anschlußflansch versehen sein kann. In diesem Falle wird also die sowieso am Rohrabschnitt 1' vorhandene Öffnung ausgenutzt, um am überragenden Ende entweder das erwähnte Anschlußstück anzuschließen oder direkt ein entsprechend formangepaßtes Leitungsende der anzuschließenden Leitung, die hier nicht dargestellt ist. Der per Rollprägung (Fig. 8-11) oder Schweißung - (Fig. 12) fixierte Ventilsitzring 6 ist dabei zweckmäßig aus Edelstahlblech gebildet, was auch für die anderen Ausführungsbeispiele gilt.

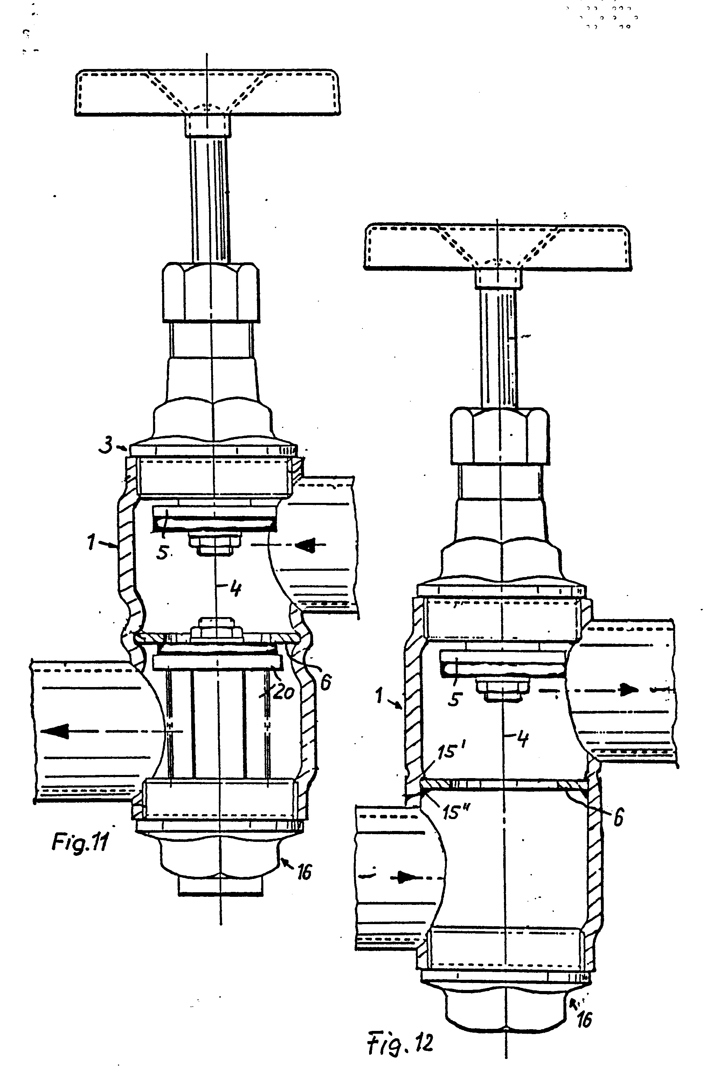

Gegenüber dieser Ausführungsform nach Fig. 8 besteht die bevorzugte Ausführungsform aus einem Absperrventil im Sinne der Fig. 9 bis 12 darin, daß die Wandprägung 15, 15' bzw. die Schweißung 15" im mittleren Bereich des Rohrabschnittes 1' angeordnet und am überragenden und mit einem Verschlußstutzen 10" angeordnet ist. Das überragende Ende des Rohrabschnittes 1' ist also hierbei praktisch genauso lang wie das über dem Ventilsitzring 6 befindliche Teil des Rohrabschnittes 1', so daß bei dieser Ausführungsform an der unteren Hälfte des Rohrabschnittes 1' der weitere Anschlußstutzen 10" seitlich angeschlossen werden kann, wodurch vorteilhaft die untere Öffnung des Rohrabschnittes 1' im Bedarfsfall für den Einbau entweder einer Tauchhülse 19 gemäß Fig. 10 oder für den Einbau einer Rückflußsperre 20 gemäß Fig. 11 zur Verfügung steht. Falls solche Elemente nicht vorgesehen werden müssen, wird diese Öffnung einfach mit einem passenden Verschlußstopfen 18 gemäß Fig. 9 verschlossen. Für das Einschrauben dieser Elemente, aber auch des Anschlußstopfens 3 des Ventilverschlußkörpers 5 sind die beiden Enden des Rohrabschnittes 1' in Form eingezogener Kröpfränder 17 ausgebildet und diese mit Innengewinde 2' versehen.

In Fig. 12 ist die eingeschweißte Version des Ventilsitzringes 6 dargestellt, wobei auch unter Bezug auf Fig. 9 der Ventilverschlußkörper 5 bzw. dessen Anschlußstopfen 3 und der Verschlußstopfen 18 am jeweils anderen Ende eingeschraubt sind.

Wie dargestellt und erläutert, stellt also der das eigentliche Ventilgehäuse 1 bildende Grundkörper des Ventils eine denkbar einfache und auch ohne weiteres in Serie zu fertigenden Baueinheit dar, die, ohne in dieses Grundprinzip eingreifen zu müssen, Grundlage für die verschiedensten Anschlußvariantenausbildungen ist, egal ob nun daran einfach Anschlußstutzen im Sinne der Fig. 1-5 und 8 angesetzt oder Ausführungsformen nach den Fig. 9-12 vorgesehen werden, denen im übrigen der Vorzug gegeben wird, da sich hierbei zusätzlich zu den Anschlußstutzen 8, 10" eine Öffnung für den Anschluß von Tauchhülsen 19, Rückflußsperren 20 od. dgl. unmittelbar am Ventil selbst ergibt, was deren sonst aufwendigen Einbau im Zuge einer Heizkreisleitung erübrigt.

**Ansprüche**

1. Absperrventil für insbesondere Heizkesselanschlußarmaturen, bestehend aus einem Gehäuse mit Ventilsitz, zu dem im Gehäuse ein verstellbarer Ventilverschlußkörper angeordnet ist, **dadurch gekennzeichnet,** daß das Gehäuse - (1) als gerader Rohrabschnitt (1') ausgebildet und dessen einer Öffnungsbereich mit Innengewinde - (2) zur abgedichteten Aufnahme des einschraubbaren Anschlußstopfens (3) des axial in Richtung der Rohrabschnittlängsachse (4) verstellbaren Ventilverschlußkörpers (5) versehen ist, wobei zwischen dem angesetzten, eingesetzten oder eingeprägten, als Ventilsitzring (6) ausgebildeten Ventilsitz und dem Anschlußstopfen (3) des Ventilverschlußkörpers (5) der Rohrabschnitt (1') eine Wandöffnung (7) und an dieser ein ebenfalls rohrförmiger Anschlußstutzen (8) angeschweißt und unterhalb des Ventilsitzringes (6) mindestens ein weiterer Anschluß (9) für ein weiteres Anschlußelement (10) angeordnet ist.

2. Absperrventil nach Anspruch 1, **dadurch gekennzeichnet,** daß am Gehäuse (1) zwei Anschlußstutzen (8', 10') angeordnet sind, deren ventilverschlußkörperseitigen Enden (11) abgewinkelt ausgebildet sind.

3. Absperrventil nach Anspruch 2, **dadurch gekennzeichnet,** daß die Enden (11) der beiden Anschlußstutzen (8', 10') mit 45° abgewinkelt ausgebildet und die beiden Enden (11) zueinander unter 90° am Gehäuse (1) angeschlossen sind.

4. Absperrventil nach Anspruch 1, **dadurch gekennzeichnet,** daß am Gehäuse (1) zwei Anschlußstutzen (8, 10) angeschlossen sind, von denen der eine (10) bogenförmig oder abgewinkelt ausgebildet und der andere senkrecht zur Längsachse des Rohrabschnittes (1') in diesen einmündend angeordnet ist.

5. Absperrventil nach Anspruch 4, **dadurch gekennzeichnet,** daß der gebogene Anschlußstutzen (10) in Form eines 90°-Bogen-oder Winkelstükkes ausgebildet ist.

6. Absperrventil nach einem der Ansprüche 1 bis 5, **dadurch gekennzeichnet,** daß das Gehäuse (1) in Form einer den Rohrabschnitt (1') bildenden Rohrerweiterung (1") ausgebildet ist, wobei der Ventilsitz aus der Erweiterungsstufe (12) oder einem in die Stufe (12) eingesetzten Ventilsitzring (6') gebildet ist.

7. Absperrventil nach einem der Ansprüche 1 bis 6, **dadurch gekennzeichnet,** daß mindestens einer der Anschlußstutzen (8, 8', 10, 10') an seinem ventilverschlußkörperfernen Ende (13) mit einem Überwurfmutterhaltekragen (14) versehen ist.

8. Absperrventil nach Anspruch 1, **dadurch gekennzeichnet,** daß der Ventilsitzring (6) mit seinem äußeren Umfangsrand im Inneren des Rohrabschnittes (1') unterhalb des seitlichen Anschlußstutzens (8) angeordnet und das Ende des Rohrabschnittes (1') über den Ventilsitzring (6) hinaus verlängert ausgebildet ist.

9. Absperrventil nach Anspruch 8, **dadurch gekennzeichnet,** daß der Ventilsitzring (6) mit seinem äußeren Umfangsrand zwischen einer beidseitig zum Ring (6) und unterhalb des seitlichen Anschlußstutzens (8) angeordneten Wandprägung - (15) des Rohrabschnittes (1') fixiert ist.

10. Absperrventil nach Anspruch 8 oder 9, **dadurch gekennzeichnet,** daß der Ventilsitzring - (6) im mittleren Bereich des Rohrabschnittes (1') angeordnet und am überragenden und mit einem Verschluß (16) versehenen Ende des Rohrabschnittes (1') ein weiterer seitlicher Anschlußstutzen (10") angeordnet ist.

11. Absperrventil nach einem der Ansprüche 8 bis 10, **dadurch gekennzeichnet,** daß beide Enden des Rohrabschnittes (1') in Form eingezogener Kröpfränder (17) ausgebildet und diese mit Innengewinde (2') versehen sind.

12. Absperrventil nach Anspruch 10 oder 11, **dadurch gekennzeichnet,** daß der Verschluß - (16) als einschraubbarer Verschlußstopfen (18) oder als einschraubbare Tauchhülse (19) oder als einschraubbare Rückflußsperre (20) ausgebildet ist.

13. Absperrventil nach einem der Ansprüche 8 bis 12, **dadurch gekennzeichnet,** daß die Öffnungsquerschnitte an den Enden des Rohrabschnittes (1') identisch ausgebildet sind.

14. Absperrventil nach Anspruch 8 oder 9, **dadurch gekennzeichnet,** daß das Ende des Rohr abschnittes (1') in Form eines durchmesserreduzierten Anschlußstückes (21) ausgebildet ist.

15. Absperrventil nach Anspruch 1, **dadurch gekennzeichnet,** daß einer der Anschlußstutzen - (8, 8', 10, 10') als an sich bekannter Schraub-oder Flanschanschluß und der andere als frei endendes, auf gewünschte Länge abgelängtes Rohrstück (22) ausgebildet ist.

16. Absperrventil nach Anspruch 15, **dadurch gekennzeichnet,** daß das Rohrstück (22) an seinem freien Ende mit Außengewinde und/oder mit Innengewinde versehen ist.

Fig.1

Fig.2

Fig.3

Fig.4

Fig.5

Fig.6

Fig. 7

Fig. 8

Fig. 9

Fig. 10

Fig.11

Fig.12